# EUROPÄISCHE PATENTSCHRIFT

(11) **EP 2 577 903 B1**
(45) Veröffentlichungstag und Bekanntmachung des Hinweises auf die Patenterteilung: **13.03.2019**
(21) Anmeldenummer: 11740614.0
(22) Anmeldetag: 22.07.2011
(51) Int. Cl.: H04L 9/32, H04L 12/46, H04L 29/06

(54) **VERFAHREN UND SYSTEM ZUR MANIPULATIONSSICHEREN ÜBERTRAGUNG VON STEUERDATEN**
METHOD AND SYSTEM FOR TRANSMISSION OF CONTROL DATA WITH PROTECTION AGAINST MANIPULATION
PROCÉDÉ ET SYSTÈME DE TRANSMISSION DE DONNÉES DE CONTRÔLE AVEC UNE PROTECTION CONTRE DES MANIPULATIONS

(30) Priorität: 03.08.2010 DE 102010033229
(43) Veröffentlichungstag der Anmeldung: 10.04.2013
(73) Patentinhaber: Siemens Aktiengesellschaft, 80333 München (DE)
(72) Erfinder: FALK, Rainer, 85586 Poing (DE)
(86) Internationale Anmeldenummer: PCT/EP2011/062639
(87) Internationale Veröffentlichungsnummer: WO 2012/016857

(56) Entgegenhaltungen:
- WO-A1-00/72502
- DE-B3-102006 003 167
- US-A1- 2004 059 917
- US-A1- 2005 108 617
- "Chapter 11: Digital Signatures ED - Menezes A J; Van Oorschot P C; Vanstone S A", HANDBOOK OF APPLIED CRYPTOGRAPHY; [CRC PRESS SERIES ON DISCRETE MATHEMATICES AND ITS APPLICATIONS], CRC PRESS SERIES ON DISCRETE MATHEMATICS AND ITS APPLICATIONS, BOCA RATON, FL, US, PAGE(S) 425 - 488 , 1. Oktober 1996 (1996-10-01), XP001525011, ISBN: 978-0-8493-8523-0 Gefunden im Internet: URL:http://www.cacr.math.uwaterloo.ca/hac/

## Beschreibung

Die Erfindung betrifft ein Verfahren und System zur manipulationssicheren Übertragung von Steuerdaten zwischen Steuereinheiten eines Netzwerkes.

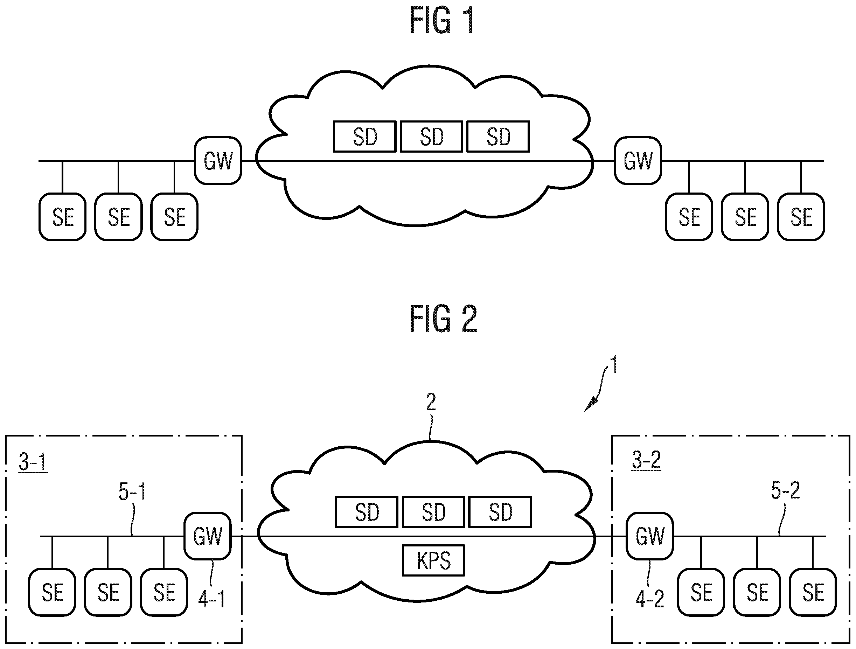

Fig. 1 zeigt eine Darstellung eines herkömmlichen Netzwerkes, bei dem Steuerdaten zwischen Steuereinheiten übertragen bzw. ausgetauscht werden. Bei dem in Fig. 1 dargestellten Beispiel sind zwei Steuernetzwerke über ein Übertragungsnetzwerk miteinander verbunden. Die beiden Steuernetzwerke weisen jeweils ein Gateway zum Anschluss an das Übertragungsnetzwerk auf. Die beiden Steuernetzwerke enthalten jeweils mehrere Steuereinheiten SE, die beispielsweise über einen Bus an das Gateway des Steuernetzwerkes angeschlossen sind. Die beiden Steuernetzwerke tauschen über das Übertragungsnetzwerk Steuerdaten SD1, SD2, SD3... aus. Bei den Steuereinheiten SE kann es sich um unterschiedliche Vorrichtungen handeln, beispielsweise Steuerrechner, speicherprogrammierbare Steuerungen, Roboterarme, Sensoren, Aktoren und dergleichen. Weiterhin ist es möglich, dass ein Steuernetzwerk mit einer Leitstelle über das Übertragungsnetzwerk kommuniziert, beispielsweise einem SCADA-System.

Bei dem Übertragungsnetzwerk kann es sich beispielsweise um ein Ethernet-basiertes oder IP-basiertes Produktionsnetzwerk handeln, das Steuernetzwerke unterschiedlicher Fertigungszellen miteinander verbindet. Weiterhin kann es sich bei dem Übertragungsnetzwerk auch um ein Zugnetzwerk handeln, das Netzwerke verschiedener Zugwaggons miteinander verbindet. Züge verfügen beispielsweise über Datennetzwerke zur Durchführung der Zugsteuerung bzw. Fahrzeugsteuerung oder sonstiger Betreiberfunktionen. Weiterhin kann es sich bei dem Übertragungsnetzwerk um ein Netzwerk eines Energieautomatisierungsnetzes handeln.

Eine korrekte Ausführung der Steuerungsüberwachungsfunktionen macht es erforderlich, dass das Steuernetzwerk und die darüber verbundenen Steuerungskomponenten bzw. Steuereinheiten ordnungsgemäß funktionieren. Bei einer Manipulation des Steuernetzwerkes ist dies jedoch nicht gewährleistet. Dadurch kann ein ordnungsgemäßer Betrieb und gegebenenfalls die Sicherheit der gesteuerten Anlage beeinträchtigt werden.

In einer räumlich eng zusammenhängenden Umgebung kann durch physikalische Schutzmaßnahmen das Steuernetzwerk vor Manipulationen geschützt werden, so dass das Steuernetzwerk für einen Angreifer nicht zugänglich ist. Bei verteilten Steuernetzwerken, die beispielsweise bei einer Produktionsanlage oder in einem Fahrzeug, beispielsweise einem Zug, verlegt sind, ist dies jedoch nicht möglich. Bei derartigen verteilten Steuernetzwerken werden Steuerdaten typischerweise über ein Übertragungsnetzwerk zwischen getrennten Netzwerkbereichen übertragen. So kann beispielsweise eine Datenübertragung zwischen Zugteilen (Waggons) erfolgen. Weiterhin kann eine Datenübertragung zwischen räumlich getrennten Bereichen innerhalb eines Zuges geschehen, beispielsweise zwischen einem Schaltschrank und einer Steuerkomponente, die in einem Deckencontainer oder im Boden eines Zugwaggons verbaut sind. Weiterhin werden beispielsweise Steuerdaten von einem Stellwerk zu einer Fahrwegsignaleiheit oder einer Weiche übertragen. Ein weiteres Beispiel ist die Übertragung von Daten zwischen Fertigungszellen, die unterschiedliche Steuernetzwerke besitzen. Weiter kann eine Datenübertragung zwischen einem Sensor/Aktor und einer Steuerung einer Prozessautomatisierungsanlage, beispielsweise einer Raffinerie, über ein Übertragungsnetzwerk durchgeführt werden. Ein weiteres Beispiel ist die Übertragung von Daten zwischen einem Substation-Controller eines Energieautomatisierungssystems und einer Leitstelle.

Daher werden Steuernetzwerke oft physikalisch zugangsgeschützt verlegt, beispielsweise in speziellen Kabelschächten, so dass sie nicht für Dritte zugänglich sind und Manipulationen möglichst verhindert werden. Dies ist jedoch in der Regel kostenaufwändig und wegen der aufwändigen Installation und Notwendigkeit, die Durchführung von Wartungsmaßnahmen zu ermöglichen, nicht allgemein umsetzbar.

Weiterhin ist bekannt, Daten bei der Übertragung durch eine Prüfsumme, beispielsweise mit einer CRC Prüfungssumme zu schützen. Diese Prüfsumme eignet sich jedoch nur, um zufällige Übertragungsfehler zu erkennen. Daher werden herkömmlicher Weise auch kryptographische Prüfsummen eingesetzt bzw. verwendet, beispielsweise ein Message Authentication Code oder eine digitale Signatur. Hierbei werden die übertragenen Steuerdaten um eine kryptographische Prüfsumme ergänzt. Die kryptographische Prüfsumme wird bei Empfang geprüft. Auf Seiten des empfangenen Steuergerätes werden nur solche Steuerdaten weiter verarbeitet, deren kryptographische Prüfsumme erfolgreich geprüft wurde. Die übertragenen Steuerdaten sind somit durch die kryptographische Prüfsumme geschützt. Ein derartiger kryptographischer Schutz ist jedoch nur aufwändig in existierenden Komponenten zu integrieren, da sie eine bestimmte Rechenleistung, einen bestimmten Speicherplatz und einen bestimmten Nachrüstungsaufwand verlangen. Das Vorsehen einer separaten Verschlüsselungsvorschaltkomponente, welche die Daten vor der Übertragung verschlüsselt bzw. mit einer kryptographischen Prüfsumme versieht, ist ebenfalls nur mit erheblichem technischen Aufwand realisierbar. Ein weiterer Nachteil besteht darin, dass die durchgeführten kryptographischen Rechenoperationen zu Verzögerungen führen, was insbesondere bei echtzeitkritischen Steuerungs- und Regelungsaufgaben unerwünscht ist oder sogar die Sicherheit beeinträchtigen kann. Weiterhin ist das Vorsehen einer derartigen Verschlüsselungsvorschaltkomponente nicht rückwirkungsfrei auf die entsprechende Steuerungsanlage.

WO 00/72502 A1 zeigt die elektronische Signatur eines Textes (z.B. einer Überweisung), wobei die elektronische Signatur dem Text als "Impressum" angehängt wird.

DE 10 2006 003167 B3 zeigt das Sichern einer Echtzeit-Kommunikation zwischen Teilnehmern in einem informationsverarbeitenden System gegen sicherheitsrelevante Angriffe mit Hilfe eines Sicherungs-Mittels, beispielsweise Message Authentication Codes (MAC), Datenverschlüsselungs-Algorithmen oder Mittel (wie z.B. Sequenzzähler) zur Vermeidung von Replay-Attacken.

Es ist daher eine Aufgabe der vorliegenden Erfindung, ein Verfahren und ein System zur manipulationssicheren Übertragung von Steuerdaten zwischen Steuereinheiten über ein Netzwerk zu schaffen, die mit einem geringen technischen Aufwand implementierbar sind und dennoch einen hohen Schutz gegenüber Manipulationen bei der Übertragung von Steuerdaten bieten.

Diese Aufgabe wird durch ein Verfahren mit den in Patentanspruch 1 angegebenen Merkmalen gelöst.

Die Erfindung schafft ein Verfahren zum Erkennen einer Manipulation bei der Übertragung von Steuerdaten von einer ersten Steuereinheit zu einer zweiten Steuereinheit über ein Netzwerk mit den Schritten:
(a) Senderseitiges Erzeugen von Integritätsprüfinformationsdaten für die von der ersten Steuereinheit gesendeten Steuerdaten durch eine Integritätsprüferzeugungseinheit;
(b) Berechnen einer kryptographischen Prüfsumme für die senderseitig erzeugten Integritätsprüfinformationsdaten durch die Integritätsprüferzeugungseinheit mittels eines kryptographischen Schlüssels;
(c) Übertragen der senderseitig erzeugten Integritätsprüfinformationsdaten und der zugehörigen von der Integritätsprüferzeugungseinheit berechneten kryptographischen Prüfsumme zu einer Integritätsprüfverifikationseinheit, welche die kryptographische Prüfsumme mittels einer kryptographischen Schlüssels empfangsseitig verifiziert;
(d) Empfangsseitiges Erzeugen von Integritätsprüfinformationsdaten für die durch die zweite Steuereinheit empfangenen Steuerdaten durch die Integritätsprüfverifikationseinheit; und
(e) Vergleichen der durch die Integritätsprüfverifikationseinheit empfangsseitig erzeugten Integritätsprüfinformationsdaten und der zusammen mit der durch die Integritätsprüfverifikationseinheit verifizierten kryptographischen Prüfsumme empfangenen senderseitig erzeugten Integritätsprüfinformationsdaten zur Erkennung einer Manipulation der übertragenen Steuerdaten.

Bei dem erfindungsgemäßen Verfahren werden die Steuerdaten in Steuerdatenpaketen, die Paketverwaltungsdaten und Nutzdaten aufweisen, unverschlüsselt übertragen.

Bei dem erfindungsgemäßen Verfahren werden die erzeugten Integritätsprüfinformationsdaten durch einen Hash-Wert von zumindest einem Teil der in einem Steuerdatenpaket oder in einer bestimmten Anzahl von Steuerdatenpaketen enthaltenen Steuerdaten und/oder Paketverwaltungsdaten gebildet.

Bei einer möglichen Ausführungsform des erfindungsgemäßen Verfahrens werden die Integritätsprüfinformationsdaten durch die Integritätsprüferzeugniseinheit für jedes Steuerdatenpaket erzeugt, wobei die Integritätsprüfinformationsdaten aufweisen:
einen Hash-Wert der Paketverwaltungsdaten des Steuerdatenpaketes,
einen Hash-Wert der Nutzdaten des Steuerdatenpaketes und einen Zeitstempel zur Angabe des Zeitpunktes der senderseitigen Erzeugung der Integritätsprüfinformationsdaten.

Bei einer möglichen Ausführungsform des erfindungsgemäßen Verfahrens werden die Integritätsprüfinformationsdaten in regelmäßigen Zeitabständen durch die Integritätsprüferzeugungseinheit erzeugt.

Bei einer möglichen Ausführungsform des erfindungsgemäßen Verfahrens werden die Steuerdaten über ein drahtloses oder ein drahtgebundenes Übertragungsnetzwerk in Echtzeit übertragen.

Bei einer möglichen Ausführungsform des erfindungsgemäßen Verfahrens wird die durch die Integritätsprüferzeugungseinheit berechnete kryptographische Prüfsumme zusammen mit den senderseitig erzeugten Integritätsprüfinformationsdaten über das Übertragungsnetzwerk für die Steuerdaten oder über eine separate Kommunikationsverbindung von der ersten Steuereinheit zu der zweiten Steuereinheit übertragen.

Bei einer möglichen Ausführungsform des erfindungsgemäßen Verfahrens erzeugt die Integritätsprüfverifikationseinheit bei Erkennung einer bei der Übertragung der Steuerdaten von der ersten Steuereinheit zu der zweiten Steuereinheit aufgetretenen Manipulation eine Alarmmeldung und sendet diese erzeugte Alarmmeldung an die zweite Steuereinheit.

Bei einer möglichen Ausführungsform des erfindungsgemäßen Verfahrens geht die zweite Steuereinheit nach Empfang der Alarmmeldung durch die Integritätsprüfverifikationseinheit in einen betriebssicheren Zustand über.

Die Erfindung schafft ferner ein Datenübertragungssystem gemäß Anspruch 8 zur Übertragung von Steuerdaten von einer ersten Steuereinheit zu einer zweiten Steuereinheit über ein Netzwerk mit:
(a) mindestens einer Integritätsprüferzeugungseinheit, welche senderseitig Integritätsprüfinformationsdaten für die von der ersten Steuereinheit gesendeten Steuerdaten erzeugt und eine kryptographische Prüfsumme für die erzeugten Integritätsprüfinformationsdaten mittels eines kryptographischen Schlüssels berechnet und mit
(b) mindestens einer Integritätsprüfverifikationseinheit, welche die von der Integritätsprüferzeugungseinheit senderseitig erzeugten Integritätsprüfinformationsdaten und die zugehörige berechnete kryptographische Prüfsumme empfängt und die kryptographische Prüfsumme mittels eines kryptographischen Schlüssels verifiziert,
wobei die Integritätsprüfverifikationseinheit die Integritätsprüfinformationsdaten für die durch die zweite Steuereinheit empfangenen Steuerdaten empfangsseitig erzeugt und diese empfangsseitig erzeugten Integritätsprüfinformationsdaten mit den zusammen mit der verifizierten kryptographischen Prüfsumme empfangenen senderseitig erzeugten erhaltenen Integritätsprüfinformationsdaten zur Erkennung einer Manipulation der übertragenen Steuerdaten vergleicht.

Bei einer möglichen Ausführungsform des erfindungsgemäßen Datenübertragungssystems ist die erste Steuereinheit an einem ersten Steuernetzwerk angeschlossen, das ein erstes Gateway aufweist,
wobei die zweite Steuereinheit an ein zweites Steuernetzwerk angeschlossen ist, das ein zweites Gateway aufweist,
wobei die beiden Gateways der Steuernetzwerke über ein Übertragungsnetzwerk miteinander verbunden sind.

Bei einer möglichen Ausführungsform des erfindungsgemäßen Datenübertragungssystems ist das erste Steuernetzwerk und/oder das zweite Steuernetzwerk und/oder das Übertragungsnetzwerk ein Ethernet, insbesondere ein Profinet.

Bei einer möglichen Ausführungsform des erfindungsgemäßen Datenübertragungssystems weisen die Steuereinheiten jeweils Sensoren, Aktoren und einen Steuerrechner auf.

Bei einer möglichen Ausführungsform des erfindungsgemäßen Datenübertragungssystems ist das Netzwerk ein Fahrzeugnetzwerk, insbesondere ein Zugnetzwerk.

Bei einer weiteren möglichen Ausführungsform des erfindungsgemäßen Datenübertragungssystems ist das Netzwerk ein Energiesteuerungsnetzwerk.

Bei einer weiteren möglichen Ausführungsform des erfindungsgemäßen Datenübertragungssystems ist das Netzwerk ein Automatisierungssteuerungsnetzwerk, insbesondere ein Prozesssteuerungsnetzwerk oder ein Produktionssteuerungsnetzwerk.

Bei einer möglichen Ausführungsform des erfindungsgemäßen Datenübertragungssystems ist die Integritätsprüferzeugungseinheit in dem ersten Gateway des ersten Steuernetzwerkes und die Integritätsprüfverifikationseinheit in dem zweiten Gateway des zweiten Steuernetzwerkes integriert.

Im Weiteren werden mögliche Ausführungsformen des erfindungsgemäßen Verfahrens des erfindungsgemäßen Datenübertragungssystems zur manipulationssicheren Übertragung von Steuerdaten zwischen Steuereinheiten über ein Netzwerk unter Bezugnahme auf die beigefügten Figuren beschrieben.

Es zeigen:
- Fig. 1: ein Diagramm zur Darstellung der Datenübertragung zwischen Steuereinheiten für ein Übertragungsnetzwerk bei einem herkömmlichen System;
- Fig. 2: ein Diagramm zur Darstellung einer möglichen Ausführungsform zur manipulationssicheren Übertragung von Steuerdaten zwischen Steuereinheiten bei einem erfindungsgemäßen Datenübertragungssystem;
- Fig. 3: ein weiteres Diagramm zur Darstellung einer möglichen Ausführungsform zur modulationssicheren Übertragung von Steuerdaten zwischen Steuereinheiten bei einem erfindungsgemäßen Datenübertragungssystem;
- Fig. 4: ein Ablaufdiagramm zur Darstellung einer möglichen Ausführungsform des erfindungsgemäßen Verfahrens zur manipulationssicheren Übertragung von Steuerdaten zwischen Steuereinheiten.
- Fig. 5: ein Signaldiagramm zur Darstellung einer möglichen Ausführungsform des erfindungsgemäßen Verfahrens zur manipulationssicheren Übertragung von Steuerdaten zwischen Steuereinheiten.

Wie man aus Fig. 2 erkennen kann, werden bei einer möglichen Ausführungsform des erfindungsgemäßen Datenübertragungssystems 1 Steuerdaten SD zwischen Steuereinheiten SE über ein Übertragungsnetzwerk 2 des Datenübertragungssystems 1 übertragen. Bei dem in Fig. 2 dargestellten Ausführungsbeispiel sind zwei getrennte Steuernetzwerke 3-1, 3-2 über das Übertragungsnetzwerk 2 miteinander verbunden. Bei dem in Fig. 2 dargestellten Ausführungsbeispiel weist jedes der beiden Steuernetzwerke 3-1, 3-2 ein Gateway 4-1, 4-2 zum Anschluss des jeweiligen Steuernetzwerkes an das Übertragungsnetzwerk 2 auf. An jedes der beiden Gateways 4-1, 4-2 ist mindestens eine Steuereinheit SE über einen Bus 5-i angeschlossen. Die beiden Steuernetzwerke 3-1, 3-2 bilden beispielsweise Steuernetzwerke unterschiedlicher Fertigungszellen in einer Produktionsanlage.

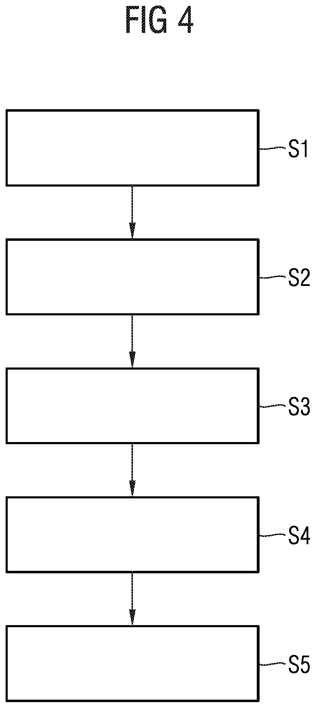

Bei dem erfindungsgemäßen Verfahren wird zunächst in einem Schritt S1, wie in dem Ablaufdiagramm gemäß Fig. 4 dargestellt, senderseitig, das heißt auf Seiten einer sendenden Steuereinheit SE, Integritätsprüfinformationsdaten IPID für die von der Steuereinheit gesendeten Steuerdaten durch eine Integritätsprüferzeugungseinheit IPEE erzeugt. Die Integritätsprüferzeugungseinheit IPEE kann beispielsweise in dem ersten Gateway 4-1 des ersten Steuernetzwerkes 3-1 integriert sein.

In einem weiteren Schritt S2 wird senderseitig eine kryptographische Prüfsumme KPS für die senderseitig erzeugten Integritätsprüfinformationsdaten IPID durch die Integritätsprüferzeugungseinheit IPEE mittels eines kryptographischen Schlüssels berechnet. Bei einer möglichen Ausführungsform erhält die in dem Gateway 4-1 des ersten Steuernetzwerks 3-1 integrierte Integritätsprüferzeugungseinheit IPEE von einer über den Bus 5-1 angeschlossenen Steuereinheit SE des ersten Steuernetzwerkes 3-1 Steuerdaten und erzeugt die Integritätsprüfinformationsdaten IPID für die von der Steuereinheit SE erhaltenen Steuerdaten. Die in dem Gateway 4-1 integrierte Integritätsprüferzeugungseinheit IPEE berechnet anschließend eine kryptographische Prüfsumme KPS für die senderseitig erzeugten Integritätsprüfinformationsdaten IPID mittels eines kryptographischen Schlüssels.

Anschließend werden in einem Schritt S3 die senderseitig erzeugten Integritätsprüfinformationsdaten IPID und die zugehörige von der Integritätsprüferzeugungseinheit IPEE berechnete kryptographische Prüfsumme KPS mit den Steuerdaten SD oder zeitlich versetzt zu einer Integritätsprüfverifikationseinheit IPVE übertragen, welche beispielsweise in dem Gateway 4-2 des zweiten Steuernetzwerkes 3-2 integriert ist. Das Übertragen der Integritätsprüfinformationsdaten IPID erfolgt in einer Variante separat von der Übertragung der Steuerdaten SD. Insbesondere kann die Übertragung der Integritätsprüfinformationsdaten IPID und der Steuerdaten SD in unterschiedlichen Datenframes bzw. unterschiedlichen Datenpaketen erfolgen. In einer Variante erfolgt die Übertragung der Integritätsprüfinformationsdaten IPID und der Steuerdaten SD über unterschiedliche Netzwerke bzw. über unterschiedliche virtuelle Lokale Netzwerke VLAN. Die Integritätsprüfverifikationseinheit IPVE verifiziert die erhaltene kryptographische Prüfsumme KPS mittels eines kryptographischen Schlüssels.

Bei einem weiteren Schritt S4 werden zudem empfangsseitig Integritätsprüfinformationsdaten IPID' für die unverschlüsselt empfangenen Steuerdaten SD durch die Integritätsprüfverifikationseinheit IPVE erzeugt.

In einem weiteren Schritt S5 werden die durch die Integritätsprüfverifikationseinheit IPVE empfangsseitig erzeugten Integritätsprüfinformationsdaten IPID' mit den senderseitig erzeugten Integritätsprüfinformationsdaten IPID die zusammen mit der durch die Integritätsprüfverifikationseinheit IPVE verifizierten kryptographischen Prüfsumme KPS empfangenen werden zur Erkennung einer Manipulation der übertragenen Steuerdaten SD verglichen.

Wie in Fig. 2 dargestellt, werden die Steuerdaten SD bei einer möglichen Ausführungsform in Steuerdatenpaketen, die Paketverwaltungsdaten und Nutzdaten aufweisen, übertragen. Bei dem erfindungsgemäßen Verfahren werden die Steuerdaten SD unverändert bzw. unverschlüsselt über das Übertragungsnetzwerk 2 übertragen. Es wird jedoch eine kryptographisch geschützte Prüfinformation bzw. eine kryptographische Prüfsumme KPS für Steuerdaten SD separat zu den Steuerdaten über das Übertragungsnetzwerk 2 mitübertragen. Bei dem in Fig. 2 dargestellten Ausführungsbeispiel sendet das Gateway 4-1 des ersten Steuernetzwerkes 3-1 zu den Steuerdaten SD, die von dem ersten Steuernetzwerk 3-1 zu dem zweiten Steuernetzwerk 3-2 übertragen werden, zusätzlich eine kryptographische Prüfinformation bzw. eine kryptographische Prüfsumme KPS, die durch das zweite Gateway 4-2 überprüft wird. Bei dem erfindungsgemäßen Verfahren werden die über das Übertragungsnetzwerk 2 kryptographisch geschützten Steuerdaten an einer Prüfstelle erfasst und eine Prüfinformation der Steuerdaten SD separat zu den Steuerdaten an eine entfernte Prüfeinheit übertragen. Die entfernte Prüfeinheit, das heißt die Integritätsprüfverifikationseinheit IPVE, befindet sich bei dem in Fig. 2 dargestellten Beispiel in einem separaten Teilnetzwerk. Die Integritätsprüfverifikationseinheit IPVE erfasst ebenfalls die über das Übertragungsnetzwerk 2 empfangenen Steuerdaten SD und führt eine Prüfung unter Verwendung der empfangenen Prüfinformation durch. Falls die empfangsseitig erzeugten Integritätsprüfinformationsdaten IPID' von den senderseitig erzeugten Integritätsprüfinformationsdaten IPID abweichen besteht die Möglichkeit, dass die übertragenen Steuerdaten SD manipuliert worden sind. In diesem Falle kann eine Steueraktion bzw. eine Fehlerbehandlung veranlasst werden. Bei einer möglichen Ausführungsform erzeugt die Integritätsprüfverifikationseinheit IPVE bei Erkennung einer bei der Übertragung der Steuerdaten SD von der ersten Steuereinheit SE1 zu der zweiten Steuereinheit SE2 aufgetretenen Manipulation eine Alarmmeldung und sendet diese Alarmmeldung beispielsweise an die zweite Steuereinheit SE2. Die zweite Steuereinheit kann nach Empfang der Alarmmeldung durch die Integritätsprüfverifikationseinheit IPVE in einen betriebssicheren Zustand übergehen. Alternativ kann das gesamte empfangende Steuernetzwerk 3-2 in einem betriebssicheren Zustand verbracht werden. Weiterhin ist es möglich, dass die Alarmmeldung lediglich einer Bedienperson angezeigt wird. Der betriebssichere Zustand kann beispielsweise durch eine Notabschaltung bzw. einen Nothalt initiiert werden. Weiterhin ist es möglich, dass die netzbasierte Steuerung in den betriebssicheren Zustand eingeschränkt wird, beispielsweise indem das entsprechende Gateway blockiert wird. In diesem Falle erfolgt nur noch eine autonome Steuerung. Weiterhin kann ein Warnhinweis an einen Bediener bzw. eine explizite Warnbestätigung durch eine Bedienperson eingefordert werden.

Bei einer möglichen Ausführungsform des erfindungsgemäßen Verfahrens wird die im Schritt S1 senderseitig erzeugten Integritätsprüfinformationsdaten IPID durch einen Hash-Wert von zumindest einem Teil der in einem Steuerdatenpaket oder in einer bestimmten Anzahl von Steuerdatenpaketen enthaltenen Steuerdaten und/oder Paketverwaltungsdaten gebildet. Dabei kann zur Berechnung des Hash-Wertes eine kryptographische Hash-Funktion eingesetzt werden, beispielsweise MD5, SHA-1, SHA256. Bei einer möglichen Ausführungsform werden die Integritätsprüfinformationsdaten IPID durch die Integritätsprüferzeugungseinheit IPEE für jedes Steuerdatenpaket erzeugt. Dabei können die Integritätsprüfinformationsdaten IPID einen Hash-Wert der Paketverwaltungsdaten des Steuerdatenpaketes, einen Hash-Wert der Nutzdaten des Steuerdatenpaketes sowie einen Zeitstempel zur Angabe eines Zeitpunktes der senderseitigen Erzeugung der Integritätsprüfinformationsdaten IPID aufweisen.

Bei einer möglichen Ausführungsform des erfindungsgemäßen Verfahrens werden die Integritätsprüfinformationsdaten IPID im Schritt S1 in regelmäßigen Zeitabständen durch die Integritätsprüferzeugungseinheit IPEE erzeugt. Die durch die Integritätsprüferzeugungseinheit IPEE berechnete kryptographische Prüfsumme KPS wird bei einer möglichen Ausführungsform zusammen mit den senderseitig erzeugten Integritätsprüfinformationsdaten IPID über das Übertragungsnetzwerk 2 übertragen. Alternativ wird die berechnete kryptographische Prüfsumme KPS über eine separate Kommunikationsverbindung von der ersten Steuereinheit SE1 des ersten Steuernetzwerkes 3-1 zu der zweiten Steuereinheit SE1 des zweiten Steuernetzwerkes 3-2 übertragen. Jede der in Fig. 2 dargestellten Steuereinheiten SE kann jeweils über Sensoren, Aktoren und einen integrierten Steuerrechner verfügen.

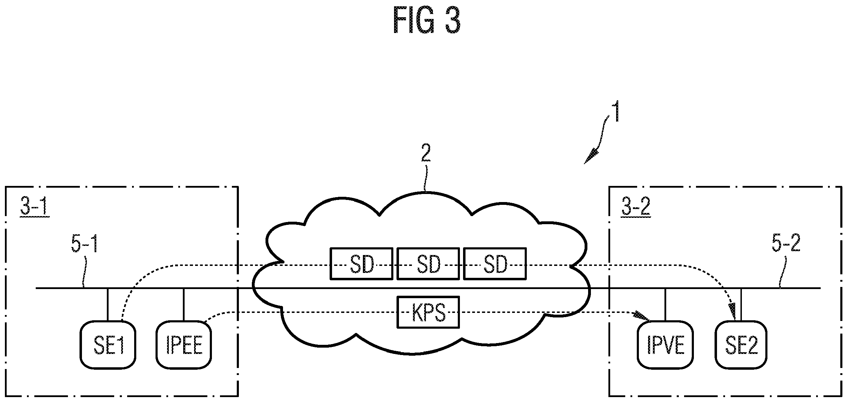

Bei der in Fig. 2 dargestellten Ausführungsform ist die Integritätsprüferzeugungseinheit IPEE in dem ersten Gateway 4-1 des ersten Steuernetzwerkes 3-1 integriert und die Integritätsprüfverifikationseinheit IPVE ist in dem zweiten Gateway 4-2 des zweiten Steuernetzwerkes 3-2 integriert. Bei einer alternativen Ausführungsform kann Integritätsprüferzeugungseinheit IPEE und die Integritätsprüfverifikationseinheit IPVE jeweils als separates Zusatzgerät ausgebildet sein. Fig. 3 zeigt ein derartiges Ausführungsbeispiel. Dabei bilden die Integritätsprüferzeugungseinheit IPEE und die Integritätsprüfverifikationseinheit IPVE jeweils ein separat an das jeweilige Steuernetzwerk anschließbares Gerät. Beispielsweise können diese Zusatzgeräte IPEE und IPVE als Vorschaltgruppe ausgebildet sein. Bei einer weiteren möglichen Ausführungsform kann die Integritätsprüferzeugungseinheit IPEE in eine sendende Steuereinheit SE und die Integritätsprüfverifikationseinheit IPVE in einer empfangenden Steuereinheit SE integriert sein. Bei einer möglichen Ausführungsform umfasst ein Zusatzgerät sowohl eine Integritätsprüferzeugungseinheit IPEE als auch eine Integritätsprüfverifikationseinheit IPVE und ist somit auf beiden Seiten der Übertragung einsetzbar.

Bei einer möglichen Ausführungsform kann die Prüfinformation bzw. die berechnete kryptographische Prüfsumme KPS seinerseits kryptographisch geschützt übertragen werden, beispielsweise über MACsec, IPsec oder SSL/TLS. Die Prüfinformation kann durch eine kryptographische Prüfsumme, beispielsweise einen Message Authentication Code oder eine digitale Signatur, geschützt werden.

Bei einer möglichen Ausführungsform wird die Prüfinformation bzw. die berechnete kryptographische Prüfsumme KPS verzögert übertragen. Beispielsweise wird die Prüfinformation bzw. die kryptographische Prüfsumme KPS alle 1 Sekunden oder alle 5 Sekunden oder alle 60 Sekunden übertragen. Die empfangende Steuereinheit kann bei dieser Ausführungsform die empfangenen Steuerdaten SD unmittelbar verarbeiten. Falls die später durch die Steuereinheit empfangene Prüfinformation bzw. die kryptographische Prüfsumme KPS eine mögliche Manipulation anzeigt, kann die empfangende Steuereinheit SE2 entsprechend reagieren.

Bei einer möglichen Ausführungsform werden die Steuerdaten SD über ein drahtgebundenes Übertragungsnetzwerk übertragen. Bei einer alternativen Ausführungsform werden die Steuerdaten SD über ein drahtloses Übertragungsnetzwerk 2 übertragen. Bei einer möglichen Ausführungsform erfolgt die Übertragung der Steuerdaten SD in Echtzeit.

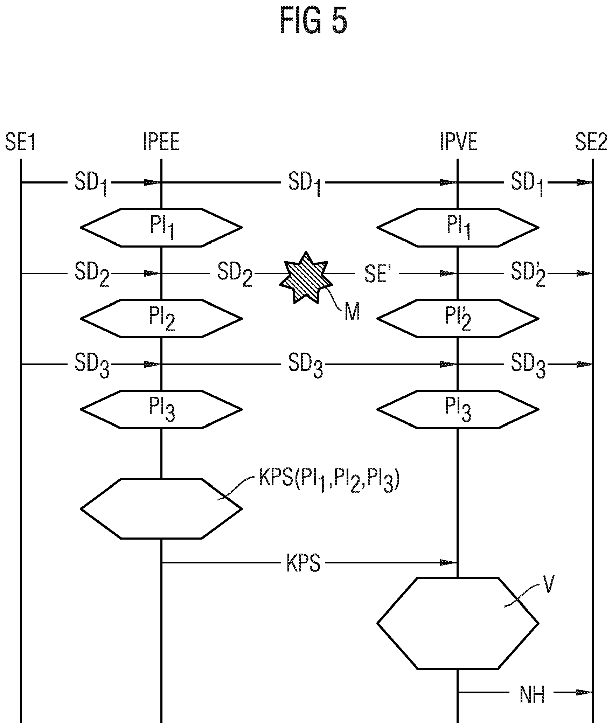

Fig. 5 zeigt ein Beispiel zur Erläuterung des erfindungsgemäßen Verfahrens zur manipulationssicheren Übertragung von Daten zwischen Steuereinheiten SE. In dem dargestellten Beispiel überträgt eine Steuereinheit SE1 drei Steuerdatenpakete SD an eine zweite Steuereinheit SE2, die sich beispielsweise in dem zweiten Steuernetzwerk 3-2 befindet. Die Integritätsprüferzeugungseinheit IPEE ermittelt für die Steuerdaten SD eine kryptographisch geschützte Prüfinformation und überträgt diese an die Integritätsprüfverifikationseinheit IPVE. Diese Integritätsprüfverifikationseinheit IPVE prüft anhand der erhaltenen kryptographischen Prüfsummen KPS, ob die empfangenen Steuerdaten SD korrekt sind. Falls nicht, so wird durch die Integritätsprüfverifikationseinheit IPVE eine Alarmmeldung erzeugt. Die Alarmmeldung kann an die empfangene Steuereinheit SE2 übertragen werden, die in einem betriebssicheren Zustand übergeht.

Wie man in Fig. 5 erkennen kann, erfolgt bei dem zweiten Steuerdatenpaket SD in dem dargestellten Beispiel eine Manipulation M. In dem dargestellten Beispiel wird erst nach der Übertragung von drei Steuerdatenpaketen SD1, SD2, SD3 eine kryptographische Prüfsumme KPS durch die Integritätsprüferzeugungseinheit IPEE berechnet: KPS=F(PI₁, PI₂, PI₃), wobei F eine kryptographische Funktion ist. Diese berechnete kryptographische Prüfsumme KPS wird an die Integritätsprüferzeugungseinheit IPVE übertragen. Bei dem in Fig. 5 dargestellten Beispiel wird auf Seiten der Integritätsprüferzeugungseinheit IPEE für jedes übertragene Steuerdatenpaket SD eine Prüfinformation PI gebildet und zwischengespeichert. Nach Aussenden einer vorgegebenen Anzahl HI3 von Steuerdatenpaketen SD erfolgt dann senderseitig die Berechnung der kryptographischen Prüfsumme KPS und das Aussenden der Prüfsumme KPS an die Integritätsprüfverifikationseinheit IPVE. Auf Seiten der Integritätsprüfverifikationseinheit wird bei Empfang eines Steuerdatenpakets SD in dem dargestellten Beispiel ebenfalls jeweils eine Prüfinformation PI ermittelt und zwischengespeichert. Mittels der empfangenen kryptographischen Prüfsumme KPS werden die empfangsseitig gespeicherten Prüfinformationen PI in einem Verifikationsschritt V verifiziert. Falls eine Abweichung bzw. eine Manipulation in einem oder mehreren der Steuerdatenpakete SD befürchtet werden muss, so veranlasst die Integritätsprüfverifikationseinheit IPVE einen Nothalt NH der die manipulierten Steuerdaten SD2' empfangenden Steuereinheit SE2, wie in Fig. 5 dargestellt. Bei dem in Fig. 5 dargestellten Beispiel besteht die kryptographische Prüfinformation PI aus mehreren Einträgen, wobei für jedes Steuerdatenpaket SD jeweils ein Eintrag erfolgt. Bei einer möglichen Ausführungsform besteht jeder Eintrag aus einem Zeitstempel, einem Hash-Wert der Paketverwaltungsdaten sowie einem Hash-Wert der Nutzdaten. Die Paketverwaltungsdaten umfassen beispielsweise eine Senderadresse, eine Empfängeradresse sowie ein verwendetes Protokoll. Bei weiteren möglichen Ausführungsformen kann ein in den Steuerdaten SD enthaltener Zählerwert hinzugefügt werden. Die Kodierung bietet den Vorteil, dass für unveränderte Werte, das heißt Header und Nutzdaten, kein neuer Hash-Wert berechnet werden muss.

Eine mögliche Ausbildung einer kryptographischen Prüfinformation, die aus drei Einträgen besteht, beispielsweise:
20100517-163325 129.87.3.2 129.76.2.15 TCP/657-80 03AE6
20100517-163327 129.87.3.1 129.76.2.12 UDP/312 4A1EFE23
20100517-163412 129.87.3.4 129.77.2.14 TCP/80-3123 9E6B8A26

Die kryptographische Prüfinformation PI besteht aus drei Einträgen: einem Zeitstempel im Format: YYYYMMDD-HHMMSS, einer Sende-IP-Adresse, einer Empfangs-IP-Adresse sowie ein Protokoll (TCP/UDP). Ferner hat jeder Eintrag eine Sende-Port-Nummer und eine Empfangs-Port-Nummer, die einen 32 Bit Hash-Wert des Datenfeldes aufweisen.

In einer weiteren Art der Codierung können Wertebereiche von Messgrößen bzw. von Steueranweisungen angegeben werden, die in einem gewissen Zeitraum vorliegen. Es kann bei einer zyklischen Datenkommunikation vorteilhaft sein, bei der eine hohe Redundanz der übertragenen Daten vorliegt.

Das erfindungsgemäße Verfahren kann als kryptographisches Integritäts-Overlay-Netzwerk verstanden werden, wobei über das Integritäts-Overlay kryptographische Prüfinformationen manipulationsgeschützt übertragen werden, um die korrekte Übertragung der Steuerdaten SD zu verifizieren.

Werden bei dem erfindungsgemäßen Verfahren Steuerdaten SD, die über das Übertragungsnetzwerk 2 übertragen werden, manipuliert, wird dies erkannt und ein Bediener gewarnt bzw. automatisch eine Safety-Funktion ausgelöst. Bei einer möglichen Manipulation der Steuerdaten wird eine die Sicherheit gefährdende Situation für die jeweilige Anlage verhindert.

Das erfindungsgemäße Verfahren ist bei bereits bestehenden Systemen und Anlagen in einfacher Weise implementierbar und nachrüstbar, da nicht die eigentliche Steuerungskommunikation kryptographisch geschützt wird, sondern eine kryptographisch geschützte Überwachung der Steuerungsdatenübertragung zusätzlich ergänzt erfolgt. Die eigentliche Steuerungskommunikation bleibt bei einem erfindungsgemäßen Verfahren unverändert. Das erfindungsgemäße Verfahren ist zudem Ressourcen-sparend implementierbar, da nicht für jedes Steuerdatenpaket SD eine separate kryptographische Prüfsumme berechnet werden muss.

## Patentansprüche

1. Verfahren zum Erkennen einer Manipulation bei der Übertragung von Steuerdaten von einer ersten Steuereinheit (SE1) zu einer zweiten Steuereinheit (SE2) über ein Netzwerk mit den folgenden Schritten:
(a) Senderseitiges Erzeugen (S1) von Integritätsprüfinformationsdaten (IPID) für die von der ersten Steuereinheit (SE1) gesendeten Steuerdaten (SD) durch eine Integritätsprüferzeugungseinheit (IPEE), wobei die Steuerdaten (SD) in Steuerdatenpaketen, die Paketverwaltungsdaten und Nutzdaten aufweisen, unverschlüsselt übertragen werden und wobei die erzeugten Integritätsprüfinformationsdaten (IPID) durch einen Hash-Wert von zumindest einem Teil der in einem Steuerdatenpaket oder in einer bestimmten Anzahl von Steuerdatenpaketen enthaltenen Steuerdaten und/oder Paketverwaltungsdaten gebildet werden;
(b) Berechnen (S2) einer kryptographischen Prüfsumme (KPS) für die senderseitig erzeugten Integritätsprüfinformationsdaten (IPID) durch die Integritätsprüferzeugungseinheit (IPEE) mittels eines kryptographischen Schlüssels;
(c) Übertragen (S3) der senderseitig erzeugten Integritätsprüfinformationsdaten (IPID) und der zugehörigen von der Integritätsprüferzeugungseinheit (IPEE) berechneten kryptographischen Prüfsumme (KPS) zu einer Integritätsprüfverifikationseinheit (IPVE), welche die kryptographische Prüfsumme (KPS) mittels eines kryptographischen Schlüssels empfangsseitig verifiziert;
(d) Empfangsseitiges Erzeugen (S4) von Integritätsprüfinformationsdaten (IPID') für die durch die zweite Steuereinheit (SE2) empfangenen Steuerdaten (SD) durch die Integritätsprüfverifikationseinheit (IPVE); und
(e) Vergleichen (S5) der durch die Integritätsprüfverifikationseinheit (IPVE) empfangsseitig erzeugten Integritätsprüfinformationsdaten (IPID') und der zusammen mit der durch die Integritätsprüfverifikationseinheit (IPVE) verifizierten kryptographischen Prüfsumme (KPS) empfangenen senderseitig erzeugten Integritätsprüfinformationsdaten (IPID) zur Erkennung einer Manipulation der übertragenen Steuerdaten (SD).

2. Verfahren nach Anspruch 1,
wobei die Integritätsprüfinformationsdaten (IPID) durch die Integritätsprüferzeugungseinheit (IPEE) für jedes Steuerdatenpaket erzeugt werden, wobei die Integritätsprüfinformationsdaten (IPID) aufweisen:
einen Hash-Wert der Paketverwaltungsdaten des Steuerdatenpaketes,
einen Hash-Wert der Nutzdaten des Steuerdatenpaketes und einen Zeitstempel zur Angabe des Zeitpunktes der senderseitigen Erzeugung der Integritätsprüfinformationsdaten (IPID).

3. Verfahren nach Ansprüchen 1 oder 2,
wobei die Integritätsprüfinformationsdaten (IPID) in regelmäßigen Zeitabständen durch die Integritätsprüferzeugungseinheit (IPEE) erzeugt werden.

4. Verfahren nach einem der vorstehenden Ansprüche,
wobei die Steuerdaten (SD) über ein drahtloses oder ein drahtgebundenes Übertragungsnetzwerk (2) in Echtzeit übertragen werden.

5. Verfahren nach einem der vorstehenden Ansprüche,
wobei die durch die Integritätsprüferzeugungseinheit (IPEE) berechnete kryptographische Prüfsumme (KPS) zusammen mit den senderseitig erzeugten Integritätsprüfinformationsdaten (IPID) über das Übertragungsnetzwerk (2) für die Steuerdaten oder über eine separate Kommunikationsverbindung von der ersten Steuereinheit zu der zweiten Steuereinheit übertragen wird.

6. Verfahren nach einem der vorstehenden Ansprüche,
wobei die Integritätsprüfverifikationseinheit (IPVE) bei Erkennung einer bei der Übertragung der Steuerdaten (SD) von der ersten Steuereinheit (SE1) zu der zweiten Steuereinheit (SE2) aufgetretenen Manipulation eine Alarmmeldung erzeugt und diese Alarmmeldung an die zweite Steuereinheit (SE2) sendet.

7. Verfahren nach Anspruch 6,
wobei die zweite Steuereinheit (SE2) nach Empfang der Alarmmeldung durch die Integritätsprüfverifikationseinheit (IPVE) in einen betriebssicheren Zustand übergeht.

8. Datenübertragungssystem zur Übertragung von Steuerdaten (SD) von einer ersten Steuereinheit (SE1) zu einer zweiten Steuereinheit (SE2) über ein Netzwerk mit:
(a) mindestens einer Integritätsprüferzeugungseinheit (IPEE), welche dazu ausgelegt ist, senderseitig Integritätsprüfinformationsdaten (IPID) für die von der ersten Steuereinheit (SE1) gesendeten Steuerdaten zu erzeugen und eine kryptographische Prüfsumme (KPS) für die erzeugten Integritätsprüfinformationsdaten (IPID) mittels eines kryptographischen Schlüssels zu berechnen, wobei die Steuerdaten (SD) in Steuerdatenpaketen, die Paketverwaltungsdaten und Nutzdaten aufweisen, unverschlüsselt übertragen werden, und wobei die Integritätsprüferzeugungseinheit (IPEE)ferner dazu ausgelegt ist, die erzeugten Integritätsprüfinformationsdaten (IPID) durch einen Hash-Wert von zumindest einem Teil der in einem Steuerdatenpaket oder in einer bestimmten Anzahl von Steuerdatenpaketen enthaltenen Steuerdaten und/oder Paketverwaltungsdaten zu bilden und mit
(b) mindestens einer Integritätsprüfverifikationseinheit (IPVE), welche dazu ausgelegt ist, die von der Integritätsprüferzeugungseinheit (IPEE) senderseitig erzeugten Integritätsprüfinformationsdaten (IPID) und die zugehörige berechnete kryptographische Prüfsumme (KPS) zu empfangen und die kryptographische Prüfsumme (KPS) mittels eines kryptographischen Schlüssels zu verifizieren,
wobei die Integritätsprüfverifikationseinheit (IPVE) dazu ausgelegt ist, die Integritätsprüfinformationsdaten (IPID') für die durch die zweite Steuereinheit (SE2) empfangenen Steuerdaten (SD) empfangsseitig zu erzeugen und diese empfangsseitig erzeugten Integritätsprüfinformationsdaten (IPID') mit den zusammen mit der verifizierten kryptographischen Prüfsumme (KPS) empfangenen senderseitig erzeugten erhaltenen Integritätsprüfinformationsdaten (IPID) zur Erkennung einer Manipulation der übertragenen Steuerdaten (SD) zu vergleichen.

9. Datenübertragungssystem nach Anspruch 8,
wobei eine erste Steuereinheit (SE1) an einem ersten Steuernetzwerk (3-1) angeschlossen ist, das ein erstes Gateway (4-1) aufweist,
wobei die zweite Steuereinheit (SE2) an ein zweites Steuernetzwerk (3-2) angeschlossen ist, das ein zweites Gateway (4-2) aufweist,
wobei die beiden Gateways (4-1, 4-2) der Steuernetzwerke (3-1, 3-2) über ein Übertragungsnetzwerk (2) verbunden sind.

10. Datenübertragungssystem nach Anspruch 9,
wobei das erste Steuernetzwerk (3-1) und/oder das zweite Steuernetzwerk (3-2) und/oder das Übertragungsnetzwerk (2) ein Ethernet, insbesondere ein Profinet, ist.

11. Datenübertragungssystem nach Ansprüchen 9-10,
wobei die Steuereinheiten (SE) jeweils Sensoren, Aktoren und einen Steuerrechner aufweisen.

12. Datenübertragungssystem nach Ansprüchen 8-11,
wobei das Netzwerk ein Fahrzeugnetzwerk, insbesondere ein Zugnetzwerk,
ein Energiesteuerungsnetzwerk oder ein Automatisierungssteuerungsnetzwerk, insbesondere ein Prozesssteuerungsnetzwerk oder ein Produktionssteuerungsnetzwerk, ist.

13. Datenübertragungssystem nach Ansprüchen 9-12,
wobei die Integritätsprüferzeugungseinheit (IPEE) in dem ersten Gateway (4-1) des ersten Steuernetzwerkes (3-1) und
die Integritätsprüfverifikationseinheit (IPVE) in dem zweiten Gateway (4-2) des zweiten Steuernetzwerkes (3-2) integriert ist.

## Claims

1. Method for recognizing manipulation during the transmission of control data from a first control unit (SE1) to a second control unit (SE2) via a network, comprising the following steps:
(a) generation (S1) of integrity check information data (IPID) on the transmitter side for the control data (SD) that is transmitted by the first control unit (SE1) by means of an integrity check generating unit (IPEE), wherein the control data (SD) is transmitted unencrypted in control data packets which comprise packet administration data and useful data and wherein the generated integrity check information data (IPID) is formed by a hash value of at least part of the control data and/or the packet administration data contained in a control data packet or in a particular number of control data packets;
(b) calculation (S2) of a cryptographic checksum (KPS) for the integrity check information data (IPID) generated on the transmitter side by means of the integrity check generating unit (IPEE) using a cryptographic key;
(c) transmission (S3) of the integrity check information data (IPID) generated on the transmitter side and the corresponding cryptographic checksum (KPS) that is calculated by the integrity check generating unit (IPEE) to an integrity check verifying unit (IPVE) which verifies the cryptographic checksum (KPS) on the receiver side using a cryptographic key;
(d) generation (S4) of integrity check information data (IPID') on the receiver side for the control data that is received by the second control unit (SE2) using the integrity check verifying unit (IPVE); and
(e) comparison (S5) of the integrity check information data (IPID') generated on the receiver side by the integrity check verifying unit (IPVE) and the integrity check information data (IPID) which is generated on the transmitter side and which is received together with the cryptographic checksum (KPS) which is verified by the integrity check verifying unit (IPVE) in order to detect manipulation of the transmitted control data (SD) .

2. Method according to claim 1, wherein the integrity check information data (IPID) is generated by the integrity check generating unit (IPEE) for each control data packet, wherein the integrity check information data (IPID) comprises:
a hash value of the packet administration data of the control data packet,
a hash value for the useful data of the control data packet and a time stamp recording the time point of the generation of the integrity check information data (IPID) on the transmitter side.

3. Method according to claims 1 or 2,
wherein the integrity check information data (IPID) is generated at regular time intervals by the integrity check generating unit (IPEE).

4. Method according to one of the preceding claims,
wherein the control data (SD) is transmitted via a wireless or a wire-bound transmission network (2) in real time.

5. Method according to one of the preceding claims,
wherein the cryptographic checksum (KPS) calculated by the integrity check generating unit (IPEE) is transmitted together with the integrity check information data (IPID) generated on the transmitter side via the transmission network (2) for the control data or via a separate communication connection from the first control unit to the second control unit.

6. Method according to one of the preceding claims,
wherein, on recognising a manipulation arising during transmission of the control data (SD) from the first control unit (SE1) to the second control unit (SE2), the integrity check verifying unit (IPVE) generates an alarm signal and transmits said alarm signal to the second control unit (SE2).

7. Method according to claim 6,
wherein, after reception of the alarm signal by the integrity check verifying unit (IPVE), the second control unit (SE2) switches to an operationally secure state.

8. Data transmission system for transmitting control data (SD) from a first control unit (SE1) to a second control unit (SE2) via a network, comprising:
(a) at least one integrity check generating unit (IPEE) which is configured to generate integrity check information data (IPID) on the transmitter side for the control data transmitted by the first control unit (SE1) and to calculate a cryptographic checksum (KPS) for the integrity check information data (IPID) generated using a cryptographic key, wherein the control data (SD) is transmitted unencrypted in control data packets which comprise packet administration data and useful data and wherein the integrity check generating unit (IPEE) is further configured to form the generated integrity check information data (IPID) by a hash value of at least part of the control data and/or the packet administration data contained in a control data packet or in a particular number of control data packets, and
(b) at least one integrity check verifying unit (IPVE) which is configured to receive the integrity check information data (IPID) generated by the integrity check generating unit (IPEE) on the transmitter side and to receive the associated calculated cryptographic checksum (KPS) and to verify said cryptographic checksum (KPS) using a cryptographic key,
wherein the integrity check verifying unit (IPVE) is configured to generate the integrity check information data (IPID') for the control data (SD) received by the second control unit (SE2) on the receiver side and to compare said integrity check information data (IPID') generated on the receiver side with the integrity check information data (IPID) received and generated on the transmitter side together with the verified cryptographic checksum (KPS), in order to recognize manipulation of the transmitted control data (SD).

9. Data transmission system according to claim 8,
wherein a first control unit (SE1) is connected to a first control network (3-1) which comprises a first gateway (4-1),
wherein the second control unit (SE2) is connected to a second control network (3-2) which comprises a second gateway (4-2),
wherein the two gateways (4-1, 4-2) of the control networks (3-1, 3-2) are connected to one another via a transmission network (2).

10. Data transmission system according to claim 9,
wherein the first control network (3-1) and/or the second control network (3-2) and/or the transmission network (2) is/are an Ethernet, in particular a Profinet.

11. Data transmission system according to claims 9-10,
wherein the control units (SE) each comprise sensors, actuators and a control computer.

12. Data transmission system according to claims 8-11,
wherein the network is a vehicle network, in particular a train network,
an energy control network or an automation control network, in particular a process control network or a production control network.

13. Data transmission system according to claims 9-12,
wherein the integrity check generating unit (IPEE) is integrated into the first gateway (4-1) of the first control network (3-1) and
the integrity check verifying unit (IPVE) is integrated into the second gateway (4-2) of the second control network (3-2) .

## Revendications

1. Procédé d'identification d'une manipulation lors de la transmission de données de commande d'une première unité de commande (SE1) à une deuxième unité de commande (SE2) sur un réseau, comportant les étapes suivantes :
(a) génération (S1), côté émetteur, par une unité de génération de contrôle d'intégrité (IPEE), de données d'information de contrôle d'intégrité (IPID) pour les données de commande (SD) émises par la première unité de commande (SE1), les données de commande (SD) étant transmises non cryptées dans des paquets de données de commande qui comportent des données de gestion de paquets et des données utiles, et les données d'information de contrôle d'intégrité (IPID) étant formées par une valeur de hachage d'au moins une partie des données de commande et/ou données de gestion de paquets contenues dans un paquet de données de commande ou dans un nombre déterminé de paquets de données de commande ;
(b) calcul (S2), par l'unité de génération de contrôle d'intégrité (IPEE), au moyen d'une clé cryptographique, d'une somme de contrôle cryptographique (KPS) pour les données d'information de contrôle d'intégrité (IPID) générées côté émetteur ;
(c) transmission (S3) des données d'information de contrôle d'intégrité (IPID) générées côté émetteur et de la somme de contrôle cryptographique (KPS) associée calculée par l'unité de génération de contrôle d'intégrité (IPEE) à une unité de vérification de contrôle d'intégrité (IPVE) qui vérifie, côté réception, la somme de contrôle cryptographique (KPS) au moyen d'une clé cryptographique ;
(d) génération (S4), côté réception, par l'unité de vérification de contrôle d'intégrité (IPVE), de données d'information de contrôle d'intégrité (IPID') pour les données de commande (SD) reçues par la deuxième unité de commande (SE2) et
(e) comparaison (S5) des données d'information de contrôle d'intégrité (IPID') générées côté réception par l'unité de vérification de contrôle d'intégrité (IPVE) et des données d'information de contrôle d'intégrité (IPID) générées côté émetteur et reçues avec la somme de contrôle cryptographique (KPS) vérifiée par l'unité de vérification de contrôle d'intégrité (IPVE) pour identifier une manipulation des données de commande transmises (SD).

2. Procédé selon la revendication 1, les données d'information de contrôle d'intégrité (IPID) étant générées par l'unité de génération de contrôle d'intégrité (IPEE) pour chaque paquet de données de commande, les données d'information de contrôle d'intégrité (IPID) comportant :
- une valeur de hachage des données de gestion de paquets du paquet de données de commande ;
- une valeur de hachage des données utiles du paquet de données de commande et
- une estampille temporelle pour indiquer l'instant de la génération, côté émetteur, des données d'information de contrôle d'intégrité (IPID).

3. Procédé selon les revendications 1 ou 2, les données d'information de contrôle d'intégrité (IPID) étant générées à intervalles de temps réguliers par l'unité de génération de contrôle d'intégrité (IPEE).

4. Procédé selon l'une des revendications précédentes, les données de commande (SD) étant transmises en temps réel sur un réseau de transmission sans fil ou filaire (2)

5. Procédé selon l'une des revendications précédentes, la somme de contrôle cryptographique (KPS) calculée par l'unité de génération de contrôle d'intégrité (IPEE) étant transmise avec les données d'information de contrôle d'intégrité (IPID) générées côté émetteur sur le réseau de transmission (2) pour les données de commande ou sur une liaison de communication séparée de la première unité de commande à la deuxième unité de commande.

6. Procédé selon l'une des revendications précédentes, l'unité de vérification de contrôle d'intégrité (IPVE) générant, à l'identification d'une manipulation survenue lors de la transmission des données de commande (SD) de la première unité de commande (SE1) à la deuxième unité de commande (SE2), un message d'alarme et envoyant ce message d'alarme à la deuxième unité de commande (SE2).

7. Procédé selon la revendication 6, la deuxième unité de commande (SE2) passant à un état de fonctionnement sûr après la réception du message d'alarme par l'unité de vérification de contrôle d'intégrité (IPVE).

8. Système de transmission de données pour la transmission de données de commande (SD) d'une première unité de commande (SE1) à une deuxième unité de commande (SE2) sur un réseau, comportant :
(a) au moins une unité de génération de contrôle d'intégrité (IPEE) qui est conçue pour générer, côté émetteur, des données d'information de contrôle d'intégrité (IPID) pour les données de commande émises par la première unité de commande (SE1) et pour calculer une somme de contrôle cryptographique (KPS) pour les données d'information de contrôle d'intégrité (IPID) au moyen d'une clé cryptographique, les données de commande (SD) étant transmises non cryptées dans des paquets de données de commande qui comportent des données de gestion de paquets et des données utiles, et l'unité de génération de contrôle d'intégrité (IPEE) étant en outre conçue pour former les données d'information de contrôle d'intégrité générées (IPID) par une valeur de hachage d'au moins une partie des données de commande et/ou données de gestion de paquets contenues dans un paquet de données de commande ou dans un nombre déterminé de paquets de données de commande et
(b) au moins une unité de vérification de contrôle d'intégrité (IPVE) qui est conçue pour recevoir les données d'information de contrôle d'intégrité (IPID) générées côté émetteur par l'unité de génération de contrôle d'intégrité (IPEE) et la somme de contrôle cryptographique associée calculée (KPS) et pour vérifier la somme de contrôle cryptographique (KPS) au moyen d'une clé cryptographique,
l'unité de vérification de contrôle d'intégrité (IPVE) étant conçue pour générer, côté réception, les données d'information de contrôle d'intégrité (IPID') pour les données de commande (SD) reçues par la deuxième unité de commande (SE2) et pour comparer ces données d'information de contrôle d'intégrité (IPID') générées côté réception avec les données d'information de contrôle d'intégrité (IPID) générées côté émetteur et reçues avec la somme de contrôle cryptographique vérifiée (KPS) pour identifier une manipulation des données de commande transmises (SD).

9. Système de transmission de données selon la revendication 8, une première unité de commande (SE1) étant raccordée à un premier réseau de commande (3-1) qui comporte une première passerelle (4-1), la deuxième unité de commande (SE2) étant raccordée à un deuxième réseau de commande (3-2) qui comporte une deuxième passerelle (4-2), les deux passerelles (4-1, 4-2) des réseaux de commande (3-1, 3-2) étant reliées via un réseau de transmission (2).

10. Système de transmission de données selon la revendication 9, le premier réseau de commande (3-1) et/ou le deuxième réseau de commande (3-2) et/ou le réseau de transmission (2) étant un Ethernet, et plus particulièrement un Profinet.

11. Système de transmission de données selon les revendications 9-10, les unités de commande (SE) comportant respectivement des capteurs, des actionneurs et un ordinateur de commande.

12. Système de transmission de données selon les revendications 8-11, le réseau étant un réseau de véhicule, et plus particulièrement un réseau de train, un réseau de commande d'énergie ou un réseau de commande d'automatisation, et plus particulièrement un réseau de commande de processus ou un réseau de commande de production.

13. Système de transmission de données selon les revendications 9-12, l'unité de génération de contrôle d'intégrité (IPEE) étant intégrée dans la première passerelle (4-1) du premier réseau de commande (3-1) et l'unité de vérification de contrôle d'intégrité (IPVE) étant intégrée dans la deuxième passerelle (4-2) du deuxième réseau de commande (3-2).
